# EUROPÄISCHE PATENTSCHRIFT

(11) **EP 3 429 925 B1**
(45) Veröffentlichungstag und Bekanntmachung des Hinweises auf die Patenterteilung: **20.04.2022**
(21) Anmeldenummer: 17711653.0
(22) Anmeldetag: 17.03.2017
(51) Int. Cl.: B64F 1/22, F15B 1/02

(54) **SCHLEPPFAHRZEUG**
TOWING VEHICLE
VÉHICULE DE REMORQUAGE

(30) Priorität: 18.03.2016 DE 102016204542
(43) Veröffentlichungstag der Anmeldung: 23.01.2019
(73) Patentinhaber: Goldhofer AG, 87700 Memmingen (DE)
(72) Erfinder: RIESER, Martin, 87437 Kempten (DE)
(74) Vertreter: Weickmann & Weickmann PartmbB
(86) Internationale Anmeldenummer: PCT/EP2017/056401
(87) Internationale Veröffentlichungsnummer: WO 2017/158163

(56) Entgegenhaltungen:
- GB-A- 818 752
- RU-C2- 2 271 316
- US-A- 4 036 384
- US-A- 4 911 603
- US-A- 5 655 733
- US-A1- 2003 165 375
- US-A1- 2014 161 579

## Beschreibung

Die Erfindung betrifft ein Schleppfahrzeug zum schleppstangenlosen Manövrieren von Flugzeugen nach dem Oberbegriff des Anspruchs 1.

Derartige Schleppfahrzeuge werden beispielsweise dazu eingesetzt, Flugzeuge nach dem Einsteigen der Passagiere, dem Schließen der Türen und dem Zurückziehen der Passagierbrücke von ihrer Parkposition am Terminal zurück auf das Vorfeld zu schieben. Ferner können Flugzeuge mittels derartiger Schleppfahrzeuge in Richtung der Startbahn oder zu Wartungshallen bewegt werden. Schleppstangenlose Schleppfahrzeuge, welche das Bugrad des zu manövrierenden Flugzeugs ergreifen und anheben, haben gegenüber Stangenschleppern den Vorteil, dass sie selbst nur ein vergleichsweise geringes Gewicht aufzuweisen brauchen, da zusätzlich zu ihrem Eigengewicht auch die Last des Bugrads auf sie übertragen wird, was ihre Traktion auf der Fahrfläche erhöht.

Um ein derartiges Schleppfahrzeug mit einem Flugzeug zu koppeln, fährt das Schleppfahrzeug mit der Aufnahmeöffnung voran an das Bugrad des Flugzeugs heran, bis dieses Bugrad in dem Aufnahmeraum angeordnet ist. Wurde die Aufnahmeöffnung mittels zweier Schwenkarme verschlossen, wird das Bugrad durch Betätigung einer Einzugsvorrichtung zwischen einer am Basisschenkel der U-Form angeordneten Stirnplatte und zwei an den Schwenkarmen angeordneten Halteplatten eingespannt. Zusätzlich wirkt noch ein Niederhalter von oben auf das Bugrad ein, so dass es an drei Abschnitten seines Umfangs sicher gehalten ist. Anschließend kann das Bugrad mittels einer Hubvorrichtung angehoben werden, um einen Verbindungszustand herzustellen, in welchem das Flugzeug mittels des Schleppfahrzeugs bewegt werden kann.

Dies alles trifft auch auf das erfindungsgemäße Schleppfahrzeug zu.

Aufgrund der zahlreichen für den Koppelvorgang erforderlichen Kraftgeräte (zum Verschwenken der Schwenkarme, zum Einziehen der Schwenkarme, zum Niederhalten des Bugrads, zum Anheben des Bugrads) sieht man leicht ein, dass sich bei herkömmlichen schleppstangenlosen Schleppfahrzeugen das Problem ergibt, dass es im Falle eines technischen Defekts des Schleppfahrzeugs nicht so einfach ist, das Bugrad wieder freizugeben. Dies ist insbesondere deshalb ein Problem, weil für die Freigabe nur eine kurze Zeitspanne zur Verfügung steht. Es muss nämlich nach Möglichkeit verhindert werden, dass das Flugzeug den ihm zugewiesenen Startslot versäumt und auf den nächsten Startslot warten muss, da dies zu Verzögerungen von bis zu einer Stunde oder mehr führen könnte, mit der Folge, dass die Passagiere möglicherweise Anschlussflüge, Geschäftstermine oder dergleichen verpassen. Dieser Zeitdruck setzt den Fahrer des Schleppfahrzeugs unter enormen Stress, was wiederum das Risiko erhöht, dass er die zahlreichen zur Freigabe des Bugrads erforderlichen Handgriffe in der Hektik versehentlich nicht in der richtigen Reihenfolge oder nicht in der gewünschten Geschwindigkeit durchführt. Zudem kann es vorkommen, dass sich der Fahrer des Schleppfahrzeugs für zumindest einen der für die Notfreigabe erforderlichen Handgriffe, nämlich das Öffnen der Schwenkarme, in den Gefahrenbereich begeben muss, d.h. in den Bereich der Aufnahmeöffnung oder gar in den Aufnahmeraum hinein, in welchem zu diesem Zeitpunkt ja immer noch das zwischen der Stirnplatte und den Halteplatten eingespannte Bugrad des Flugzeugs angeordnet ist.

Die Druckschrift US 4,911,603 A offenbart ein Schleppfahrzeug zum schleppstangenlosen Manövrieren von Flugzeugen nach dem Oberbegriff des Anspruchs 1.

Ferner sei auf die US 2014/0161579 A1 sowie die RU 2 271 316 C2 verwiesen.

Es ist daher Aufgabe der vorliegenden Erfindung, hier Abhilfe zu schaffen.

Diese Aufgabe wird erfindungsgemäß durch ein schleppstangenloses Schleppfahrzeug nach Anspruch 1 gelöst.

Der zentrale Gedanke der vorliegenden Erfindung besteht darin, einen Druckspeicher bereitzustellen, der im Falle eines Systemausfalls in dem Schleppfahrzeug als Energiequelle dient, deren Energie neben der potentiellen Energie der Bugradlast ausreicht, um auf eine manuelle Betätigung der Freigabeeinleitungseinrichtung durch eine Bedienungsperson hin den Freigabevorgang zuverlässig vollständig durchführen zu können. Somit ist sichergestellt, dass die halbautomatische Notfreigabe nicht nur bei Ausfall eines einzelnen Systems des Schleppfahrzeugs, beispielsweise der Steuerung der Kupplungsvorrichtung oder der Betriebsfluidzuführeinrichtung, durchgeführt werden kann, sondern auch bei einem vollständigen Systemausfall des Schleppfahrzeugs.

Sollte der Systemausfall bei angehobenem Bugrad auftreten, so wird das Bugrad zunächst unter Ausnutzung der potentiellen Energie der Bugradlast abgesenkt, bevor die eigentliche Freigabe des Bugrads erfolgt. Sollte der Systemausfall hingegen zu einem Zeitpunkt auftreten, zu dem das Bugrad noch nicht angehoben worden ist, kann die Absenkung des Bugrads unter Ausnutzung der potentiellen Energie der Bugradlast entfallen und gleich mit der eigentlichen Freigabe des Bugrads begonnen werden.

Als Betriebsfluid eignet sich insbesondere ein Gas oder eine Flüssigkeit, beispielsweise Druckluft oder Hydraulikfluid, insbesondere Hydrauliköl. Die Betriebsfluidzuführeinrichtung kann beispielsweise von einer Zahnradpumpe gebildet sein.

Um verhindern zu können, dass sich das Bugrad in unerwünschter Weise selbsttätig absenkt, ist in einer Hubleitung, welche zu wenigstens einem fluidbetätigbaren Kraftgerät einer Hubanordnung der Kupplungsvorrichtung führt, ein durch Zuführen von Fluiddruck an seinem Steueranschluss öffenbares Sperrventil angeordnet. In seiner Sperrstellung verhindert dieses Sperrventil den Abfluss von Betriebsfluid aus dem wenigstens einen der Hubanordnung zugeordneten Kraftgerät. Zur Ermöglichung des Absenkens des Bugrads ist jedoch vorgesehen, dass die Freigabeeinleitungseinrichtung in der Freigabeeinleitungsstellung den Druckspeicher mit dem Steueranschluss des Sperrventils verbindet.

Wurde das Sperrventil durch Zuführen des Fluiddrucks des Druckspeichers zu seinem Steueranschluss geöffnet, so wird das in dem fluidbetätigbaren Kraftgerät der Hubanordnung gespeicherte Betriebsfluid unter dem Einfluss der Bugradlast aus dem Kraftgerät ausgetrieben, wodurch das Bugrad abgesenkt wird. Dabei gewährleistet bereits allein der Strömungswiderstand am Betriebsfluidanschluss des Kraftgeräts der Hubanordnung, dass das Bugrad mit einer ausreichend niedrigen Geschwindigkeit abgesenkt wird, um von den Passagieren des Flugzeugs nicht als unangenehm empfunden zu werden. Zu diesem Effekt kann ferner auch der Strömungswiderstand der Hubleitung beitragen.

An dieser Stelle sei darauf hingewiesen, dass die Ansteuerung des in der Hubleitung angeordneten Sperrventils nur über den Druck des im Druckspeicher gespeicherten Betriebsfluids erfolgt. Da das Betriebsfluid dann, wenn es eine Flüssigkeit ist, beispielsweise ein Hydrauliköl, im Wesentlichen inkompressibel ist, ist mit der Ansteuerung des Sperrventils (bis auf mögliche Leckageströme) im Wesentlichen keine Fluidströmung verbunden.

Um die Absenkgeschwindigkeit des Bugrads auf einen angenehmen und komfortablen Wert begrenzen zu können, wird ferner vorgeschlagen, dass in der Hubleitung eine Drosseleinrichtung vorgesehen ist, welche die Strömungsgeschwindigkeit des Betriebsfluids begrenzt.

Das wenigstens eine fluidbetätigbare Kraftgerät der Hubanordnung kann ein einseitig wirkendes Kraftgerät sein, insbesondere ein nur in Hubrichtung wirkendes Kraftgerät, da die Strömung von Betriebsfluid in der anderen Wirkungsrichtung, insbesondere der Absenkrichtung, gravitationsbedingt durch die Bugradlast bewirkt wird.

Erfindungsgemäß ist ferner vorgesehen, dass die Freigabeeinleitungseinrichtung in der Freigabeeinleitungsstellung den Druckspeicher ferner mit einem weiteren Sperrventil verbindet, welches durch in der Hubleitung herrschenden Fluiddruck in eine Sperrstellung vorspannbar und bei Unterschreiten eines vorbestimmten Werts des in der Hubleitung herrschenden Fluiddrucks in eine Durchlassstellung überführbar ist, wobei das weitere Sperrventil in seiner Durchlassstellung den Druckspeicher mit wenigstens einem fluidbetätigbaren Kraftgerät einer Greifanordnung der Kupplungsvorrichtung verbindet. Hierdurch kann sichergestellt werden, dass mit der eigentlichen Freigabe des Bugrads durch die Greifvorrichtung erst dann begonnen werden kann, wenn das Bugrad vollständig abgesenkt worden und infolgedessen der Druck in der Hubleitung abgesunken ist.

In konstruktiv einfacher Weise kann ein Vorspann-Steueranschluss des weiteren Sperrventils unmittelbar mit der Hubleitung in Fluidverbindung stehen, beispielsweise dadurch, dass eine Zweigleitung vorgesehen ist, welche von der Hubleitung abzweigt und zu einem Vorspann-Steueranschluss des weiteren Sperrventils führt. Dabei kann die Zweigleitung vorzugsweise an einer Stelle der Hubleitung von dieser abzweigen, welche in Abflussströmungsrichtung von der Hubanordnung weg vor dem Sperrventil angeordnet ist.

In diesem Zusammenhang kann das vorstehend erwähnte Drosselventil noch eine weitere Funktion übernehmen. Und zwar kann es sicherstellen, dass der Druck in der Zweigleitung erst dann auf einen Wert abfällt, der die Überführung des weiteren Sperrventils in seine Durchlassstellung ermöglicht, wenn das Bugrad auch tatsächlich vollständig abgesenkt worden ist. Hierzu ist es vorteilhaft, wenn das Drosselventil in der Hubleitung in Abflussströmungsrichtung von der Hubanordnung weg stromabwärts der Stelle angeordnet ist, an der die Zweigleitung von der Hubleitung abzweigt.

In an sich bekannter Weise kann die Greifanordnung der Kupplungsvorrichtung auch bei dem erfindungsgemäßen Schleppfahrzeug wenigstens ein erstes fluidbetätigbares Kraftgerät zum Verschwenken wenigstens eines Schwenkarms der Greifanordnung umfassen oder/und wenigstens ein zweites fluidbetätigbares Kraftgerät zum Annähern des wenigstens einen Schwenkarms an den oder/und zum Entfernen des wenigstens einen Schwenkarms von dem Basisschenkel der U-Form umfassen oder/und wenigstens ein drittes fluidbetätigbares Kraftgerät zum Niederhalten des Bugrads des Flugzeugs umfassen.

Das wenigstens eine dritte fluidbetätigbare Kraftgerät zum Niederhalten des Bugrads des Flugzeugs, im folgenden auch kurz als "Niederhaltekraftgerät" bezeichnet, kann von einem federvorgespannten einseitig wirkenden Kraftgerät gebildet sein. Insbesondere kann der dem Niederhaltekraftgerät zugeordnete Niederhalter unter dem Einfluss der Federvorspannung in einen unteren Zustand vorgespannt sein, aus dem er durch Kontakt mit dem durch die Einzugsvorrichtung gegen die Stirnplatte bewegten Bugrad angehoben werden kann. Dabei wird Betriebsfluid aus dem Niederhaltekraftgerät verdrängt. Vorteilhafterweise muss hierzu ein dem Niederhaltekraftgerät zugeordnetes Sperrventil durch gezielte Druckfluidzufuhr an einem Steueranschluss geöffnet werden. Schließt dieses Sperrventil nach Beendigung der Druckfluidzufuhr an dem Steueranschluss, so kann der Niederhalter nicht weiter angehoben werden. Dies stellt in dem mit dem Bugrad des Flugzeugs gekoppelten Zustand sicher, dass sich das Bugrad nicht in unerwünschter Weise aus dem Griff der Greifvorrichtung lösen kann.

Auch bei einem Systemausfall befindet sich das dem Niederhaltekraftgerät zugeordnete Sperrventil in diesem gesperrten Zustand. Um die Freigabe des Bugrads des Flugzeugs zu ermöglichen, muss daher das Niederhaltekraftgerät zunächst entsperrt werden. Dies kann beispielsweise dadurch bewirkt werden, dass der Druckspeicher nach Überführung des weiteren Sperrventils in dessen Durchlassstellung mit dem Steueranschluss des Sperrventils des Niederhaltekraftgeräts verbunden ist.

Auch die Ansteuerung des Sperrventils des Niederhaltekraftgeräts erfolgt nur über den Druck des im Druckspeicher gespeicherten Betriebsfluids. Somit ist auch in diesem Fall dann, wenn eine Druckflüssigkeit verwendet wird, beispielsweise ein Hydrauliköl, mit der Ansteuerung des Sperrventils (bis auf mögliche Leckageströme) im Wesentlichen keine Fluidströmung verbunden.

Vorzugsweise ist das dem Niederhaltekraftgerät zugeordnete Sperrventil unmittelbar am Niederhaltekraftgerät angeordnet, um die dazwischen angeordneten Fluidleitungsvolumina möglichst gering halten zu können.

Das wenigstens eine der Einzugsvorrichtung zugeordnete Kraftgerät kann vorzugsweise von einem beidseitig wirkenden fluidbetätigbaren Kraftgerät gebildet sein. Dies ermöglicht es, die Schwenkarme mittels der Einzugsvorrichtung sowohl aktiv einzuziehen, um das Bugrad zwischen der Stirnplatte und den an den Schwenkarmen angebrachten Halteplatten einzuspannen, als auch aktiv auszufahren, um sie auf den nächsten Kopplungsvorgang vorzubereiten. Im Zusammenhang mit der erfindungsgemäßen halbautomatischen Notfreigabe des Bugrads genügt es, das wenigstens eine der Einzugsvorrichtung zugeordnete Kraftgerät in einen frei verschiebbaren Zustand überzuführen. Dies ist in Vorbereitung auf das Öffnen der Schwenkarme erforderlich, da das Bugrad zwischen der Stirnplatte und den an den Schwenkarmen angebrachten Halteplatten eingespannt ist und die somit vom Bugrad auf die Schwenkarme ausgeübte Spannkraft es diesen nicht ermöglicht, einen Kniehebelmechanismus der Schwenkvorrichtung zu überwinden.

Um nach dem Koppeln des Bugrads des Flugzeugs mit dem Schleppfahrzeug sicherzustellen, dass das Bugrad sich nicht in unerwünschter Weise selbsttätig aus dem Griff der Greifvorrichtung lösen kann, ist dem wenigstens einen der Einzugsvorrichtung zugeordneten Kraftgerät ein Sperrventil zugeordnet, das ein Entspannen der Einzugsvorrichtung, d.h. eine Ausfahrbewegung der Schwenkarme, und somit eine Freigabe des Bugrads verhindert. Analog zum dem Sperrventil des Niederhaltekraftgeräts kann auch das Sperrventil des Einzugkraftgeräts durch den Druck des im Druckspeicher gespeicherten Druckfluids im Sinne der Öffnung dieses Sperrventils angesteuert werden. Dies kann beispielsweise dadurch bewirkt werden, dass der Druckspeicher nach Überführung des weiteren Sperrventils in dessen Durchlassstellung mit dem Steueranschluss des Sperrventils des Einzugkraftgeräts verbunden ist. Infolge dieser Ansteuerung kann das Einzugkraftgerät unter dem Einfluss der Kraft, mit der das Bugrad zwischen der Stirnplatte und den an den Schwenkarmen angebrachten Halteplatten eingespannt ist, so weit ausgefahren werden, bis das Bugrad keine Kraft mehr auf die an den Schwenkarmen angebrachten Halteplatten ausübt.

Auch die Ansteuerung des Sperrventils des Einzugkraftgeräts erfolgt nur über den Druck des im Druckspeicher gespeicherten Betriebsfluids. Somit ist auch in diesem Fall dann, wenn eine Druckflüssigkeit verwendet wird, beispielsweise ein Hydrauliköl, mit der Ansteuerung des Sperrventils (bis auf mögliche Leckageströme) im Wesentlichen keine Fluidströmung verbunden. Das im Zusammenhang mit der Ausfahrbewegung bewegte Fluidvolumen entstammt dem Normalbetriebs-Fluidkreislauf.

Auch das wenigstens eine den Schwenkarmen zugeordnete Kraftgerät kann vorzugsweise von einem beidseitig wirkenden fluidbetätigbaren Kraftgerät gebildet sein. Dies ermöglicht es, die Schwenkarme sowohl aktiv zu schließen als auch sie aktiv zu öffnen. Wie bereits erwähnt, ist es vorteilhaft, wenn das wenigstens einem der Schwenkarme zugeordnete Kraftgerät mit dem ihm zugeordneten Schwenkarm über einen Kniehebelmechanismus verbunden ist. Hierdurch kann auch bei kraftlos geschaltetem oder bei infolge eines Systemausfalls kraftlosem Kraftgerät verhindert werden, dass die Schwenkarme selbsttätig verschwenken, wodurch sich die Aufnahmeöffnung in unerwünschter Weise selbsttätig öffnen und das Bugrad des Flugzeugs freigeben könnte. Wie vorstehend bereits erläutert, verhindert zudem die Kraft, die das zwischen der Stirnplatte und den Halteplatten der Schwenkarme eingespannte Bugrad über die Einzugsvorrichtung auf die Schwenkkraftgeräte ausübt, dass der Kniehebelmechanismus unbeabsichtigterweise überwunden werden kann.

Gleichwohl ist es in Weiterbildung der Erfindung möglich, dass der Druckspeicher nach Überführung des weiteren Sperrventils in dessen Durchlassstellung mit dem wenigstens einen Schwenkkraftgerät verbunden ist. Dadurch steht der Druck des im Druckspeicher gespeicherten Betriebsfluids zwar an dem Schwenkkraftgerät an, die Schwenkarme können aber erst dann geöffnet werden, wenn das Bugrad das Einzugkraftgerät so weit ausgefahren hat, dass der Kniehebelmechanismus überwunden werden kann. Das Öffnen der Schwenkarme erfolgt dann unter Einsatz der in dem Druckspeicher gespeicherten. Druckenergie. Da hierbei Betriebsfluid vom Druckspeicher zum Schwenkkraftgerät strömt, muss das Speichervolumen so groß bemessen sein, dass die Schwenkarme vollständig geöffnet werden können, damit die Freigabe des Bugrads zuverlässig gewährleistet werden kann.

Im Zusammenhang mit der vorliegenden Erfindung kann wenigstens ein fluidbetätigbares Kraftgerät von einem Kolben-Zylinder-Aggregat gebildet sein. Vorzugsweise können alle fluidbetätigbaren Kraftgeräte von Kolben-Zylinder-Aggregaten gebildet sein.

Um sicherstellen zu können, dass der Druckspeicher immer ausreichend Druckenergie zur Verfügung stellen kann, um den halbautomatischen Notfreigabeprozess durchführen zu können, wird in Weiterbildung der Erfindung vorgeschlagen, dass die Freigabeeinleitungseinrichtung in einer Normalbetriebsstellung den Druckspeicher mit einer Betriebsfluidzuführeinrichtung verbindet. Hierdurch ist gewährleistet, dass der Druckspeicher immer mit dem höchsten Druckwert gefüllt wird, der im Zuge des Aufnahmeprozesses auftritt. Es ist leicht einzusehen, dass zum Anheben des Bugrads einer A380 ein höherer Druckwert erforderlich ist als zum Anheben des Bugrads einer A319.

Schließlich kann erfindungsgemäß vorgesehen sein, dass die Freigabeeinleitungseinrichtung ein manuell betätigbares Ventil umfasst.

Die Erfindung wird im Folgenden an einem Ausführungsbeispiel an Hand der beigefügten Zeichnung näher erläutert werden. Es stellt dar:
- Figur 1: eine teilweise geschnittene Seitenansicht eines erfindungsgemäßen Schleppfahrzeugs, wobei sich die Greifvorrichtung in dem ausgeschwenkten, ausgefahrenen und abgesenkten Zustand befindet;
- Figur 2: eine Ansicht ähnlich Figur 1, wobei sich die Greifvorrichtung jedoch in dem eingeschwenkten, ausgefahrenen und abgesenkten Zustand befindet;
- Figur 3: eine Ansicht ähnlich Figur 1, wobei sich die Greifvorrichtung jedoch in dem eingeschwenkten, eingefahrenen und abgesenkten Zustand befindet;
- Figur 4: eine Ansicht ähnlich Figur 1, wobei sich die Greifvorrichtung jedoch in dem eingeschwenkten, eingefahrenen und angehobenen Zustand befindet;
- Figur 5: eine Draufsicht auf das Schleppfahrzeug der Figuren 1 bis 4;
- Figur 5a: eine vergrößerte Ansicht des Details V in Figur 5;
- Figur 6: eine vergrößerte Detailansicht zur Erläuterung des Ergreifens von Bugrädern unterschiedlichen Durchmessers;
- Figur 7: einen Hydraulikschaltplan zur Erläuterung der Funktion der Greifvorrichtung, wobei aus Gründen der übersichtlicheren Darstellung nur die eine Hälfte der zur Längsachse A des Schleppfahrzeugs symmetrischen Anordnung dargestellt ist; und
- Figur 8: einen Hydraulikschaltplan zur Erläuterung des halbautomatischen Notfreigabebetriebs.

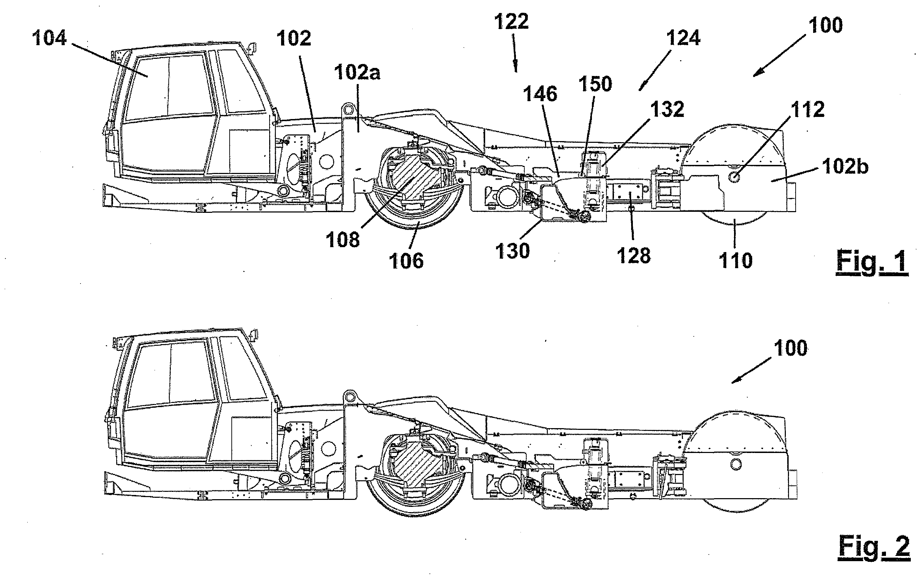

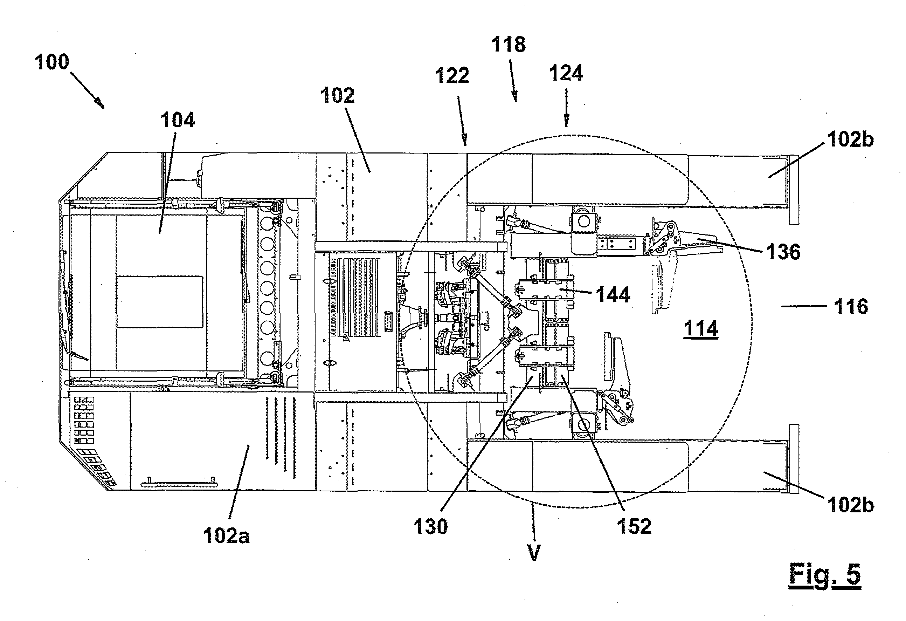

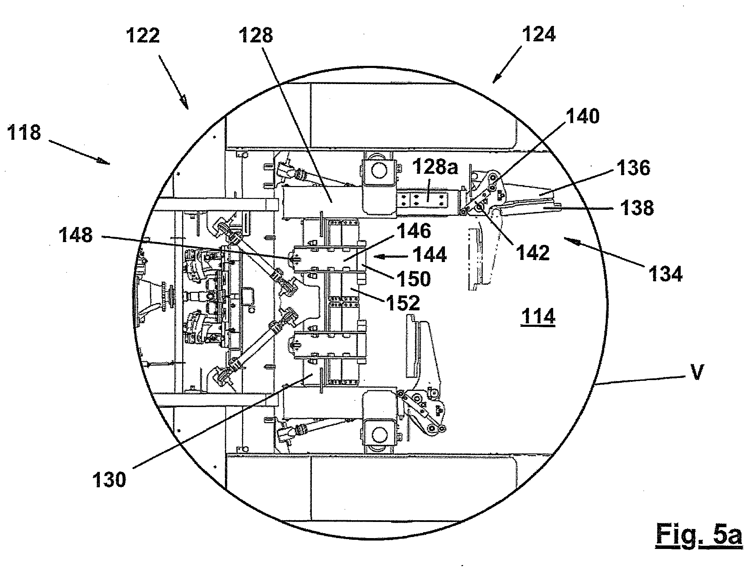

In den Figuren 1 bis 5 und 5a ist ein erfindungsgemäßes Schleppfahrzeug ganz allgemein mit 100 bezeichnet. Das Schleppfahrzeug 100 umfasst ein im Wesentlichen U-förmig ausgebildetes Fahrgestell 102 mit einer Fahrerkabine 104. Die Räder 106 einer Vorderachse 108 des Schleppfahrzeugs 100 sind einem Basisschenkel 102a der U-Form des Fahrgestells 102 zugeordnet. In analoger Weise sind die Räder 110 einer Hinterachse 112 des Schleppfahrzeugs 100 jeweils einem der Seitenschenkel 102b der U-Form des Fahrgestells 102 zugeordnet. Die beiden Seitenschenkel 102b umschließen mit dem Basisschenkel 102a einen Aufnahmeraum 114, der am hinteren Ende des Schleppfahrzeugs 100 eine Aufnahmeöffnung 116 aufweist.

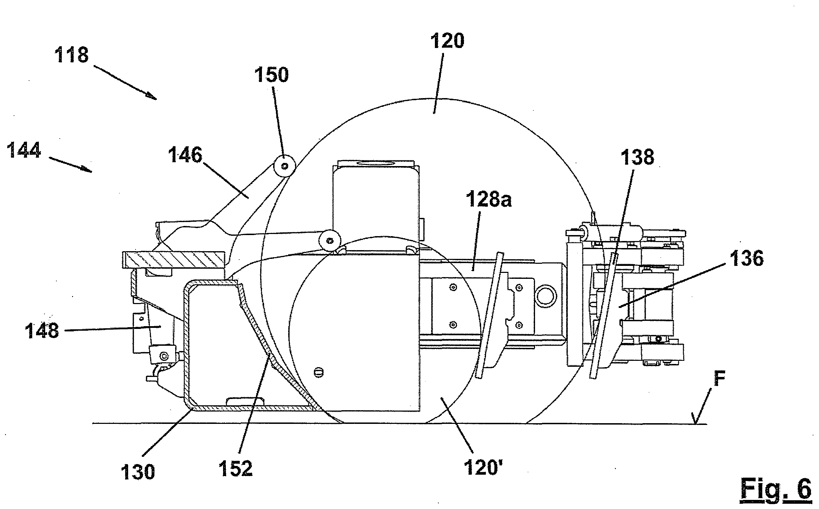

In dem Aufnahmeraum 114 ist eine Kupplungsvorrichtung 118 angeordnet, welche zum Ergreifen und Anheben eines in dem Aufnahmeraum 114 angeordneten Bugrads 120 dient (siehe Figur 6). Die Kupplungsvorrichtung 118 umfasst eine Hubvorrichtung 122 und eine Greifvorrichtung 124, deren Aufbau und Funktion nachstehend noch näher erläutert werden. Die zum Fahrbetrieb des Schleppfahrzeugs 100 und zum Betrieb der Kupplungsvorrichtung 118 im Normalbetrieb erforderliche Energie wird von einem (nicht dargestellten) Antriebsaggregat des Schleppfahrzeugs 100 bereitgestellt.

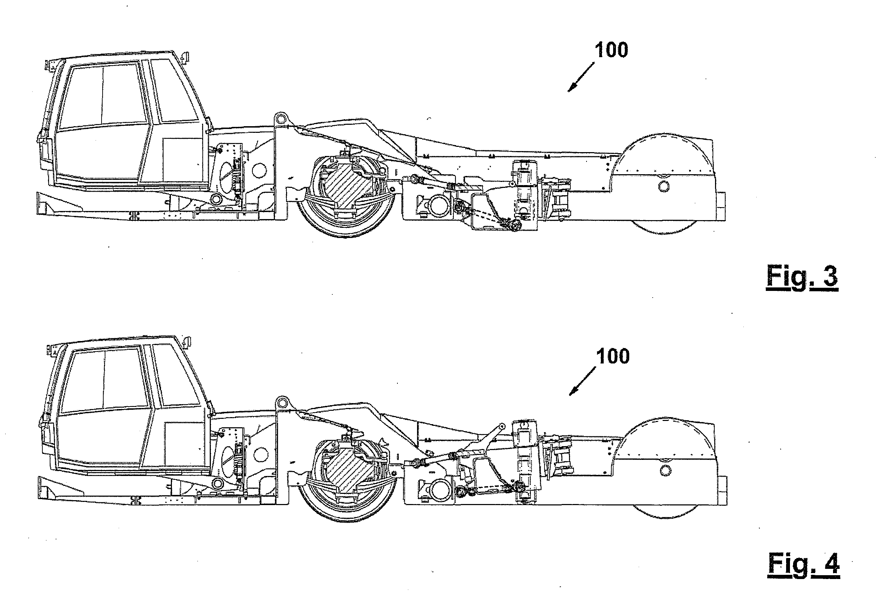

Die Greifvorrichtung 124 umfasst zwei Einzugkraftgeräte 128, die an einem Rahmen 130 der Greifvorrichtung 124 angebracht sind. Der Rahmen 130 und mit ihm die gesamte Greifvorrichtung 124 können mittels der Hubvorrichtung 122 angehoben werden (siehe Figur 4) bzw. auf die Fahrfläche F (siehe Figur 6) abgesenkt werden (siehe Figuren 1 bis 3). Hierzu umfasst die Hubvorrichtung 122 zwei Hubkraftgeräte 132, die einenends am Fahrgestell 102 und andernends am Rahmen 130 angreifen.

An relativ zum Rahmen 130 beweglichen Teilen 128a der Einzugkraftgeräte 128 ist jeweils eine Schwenkvorrichtung 134 angeordnet. Jede Schwenkvorrichtung 134 umfasst einen Schwenkarm 136, an welchem eine Halteplatte 138 angebracht ist, deren Funktion nachstehend noch näher erläutert werden wird. Der Schwenkarm 136 jeder Schwenkvorrichtung 134 kann zwischen einer ausgeschwenkten Stellung (in Figuren 5 und 5a durchgezogen dargestellt; siehe auch Figur 1) und einer eingeschwenkten Stellung (in Figuren 5 und 5a strich-punkt-punktiert dargestellt; siehe auch Figur 2) verschwenkt werden. Hierzu ist der jeweilige Schwenkarm 136 über einen Kniehebelmechanismus 140 mit einem Schwenkkraftgerät 142 verbunden.

Ferner kann jede der Schwenkvorrichtungen 134 mittels des ihr zugeordneten Einzugkraftgeräts 128 zwischen einer ausgefahrenen Stellung (in Figuren 5 und 5a oben dargestellt; siehe auch Figur 2) und einer eingezogenen Stellung (in Figuren 5 und 5a unten dargestellt; siehe auch Figur 3) verstellt werden.

Nachzutragen ist noch, dass an dem Rahmen 130 der Greifvorrichtung 124 ferner zwei Niederhaltevorrichtungen 144 angeordnet sind (siehe auch Figur 6). Jede der Niederhaltevorrichtungen 144 umfasst einen als Wippe ausgebildeten Doppelhebel 146, an dessen einem Ende ein Niederhaltekraftgerät 148 angreift und an dessen anderem Ende eine Rolle 150 angeordnet ist, mittels derer die Niederhaltevorrichtung 144 auf das Bugrad 120 bzw. 120' des jeweils angekuppelten Flugzeugs einwirkt.

Im Folgenden soll nunmehr mit Bezug auf die Figuren 1 bis 7 der Ankuppelvorgang des Bugrads 120 eines Flugzeugs an das Schleppfahrzeug 100 unter Verwendung der Greifvorrichtung 124 und der Hubvorrichtung 122 beschrieben werden: Hierzu fährt das Schleppfahrzeug 100 rückwärts an das Flugzeug heran, bis das Bugrad 120 in dem Aufnahmeraum 114 zwischen den beiden Seitenschenkeln 102b des Schleppfahrzeugs 100 angeordnet ist, und vorzugsweise sogar an eine am Rahmen 130 angeordnete rückseitige Stirnwand 152 des Aufnahmeraum 114 anstößt.

Ist das Schleppfahrzeug 100 zum Stillstand gekommen, kann der Fahrer des Schleppfahrzeugs 100 den Ankuppelvorgang beispielsweise durch Drücken eines entsprechenden (nicht dargestellten) Knopfes in der Fahrerkabine 104 einleiten. Anzumerken ist, dass die Bremsen des Schleppfahrzeugs 100 während des nachstehend beschriebenen eigentlichen Ankuppelvorgangs gelöst sind, so dass sich das Schleppfahrzeug 100 relativ zu dem Flugzeug bewegen kann.

Infolge der Einleitung des Ankuppelvorgangs werden zunächst die beiden Schwenkarme 136 mittels der Schwenkkraftgeräte 142 derart verschwenkt, dass die Aufnahmeöffnung 116 geschlossen wird, so dass das Bugrad 120 den Aufnahmeraum 114 nicht mehr verlassen kann. Hierzu werden die beiden beidseitig wirkenden Schwenkkraftgeräte 142 auf der von der Kolbenstange 142a abgewandten Seite des Kolbens 142b über die Leitungen 154 mit Betriebsfluid beaufschlagt. Dabei fließt das auf der anderen Seite des Kolbens 142b verdrängte Betriebsfluid über die Leitungen 156 zu einem (nicht dargestellten) Vorrat für Betriebsfluid hin ab. Da die Schwenkarme 136 mit den Schwenkkraftgeräten 142 über einen selbsthemmenden KniehebelMechanismus 140 verbunden sind, braucht den Schwenkkraftgeräten 142 kein Sperrventil zugeordnet zu sein, um die Schwenkarme 136 in der geschlossenen Stellung zu halten.

Anschließend werden die Schwenkarme 136 mittels der Einzugkraftgeräte 128 in Richtung auf die Stirnwand 152 zu eingezogen, bis das Bugrad 120 sowohl an der Stirnwand 152 als auch an den Halteplatten 138 der Schwenkarme 130 anliegt und zwischen diesen mit einer vorbestimmten Kraft eingespannt ist (siehe auch Figur 6). Hierzu werden die beiden beidseitig wirkenden Einzugkraftgeräte 128 auf der der Kolbenstange 128a zugewandten Seite des Kolbens 128b über die Leitungen 158 mit Betriebsfluid beaufschlagt. Dabei fließt das auf der anderen Seite des Kolbens 128b verdrängte Betriebsfluid über die Leitungen 160 zu dem (nicht dargestellten) Vorrat für Betriebsfluid hin ab.

Spätestens bei dieser Einzugsbewegung, üblicherweise jedoch bereits beim Heranfahren des Schleppfahrzeugs 100 an das Flugzeug, fährt das Bugrad 120 zudem gegen einen oder mehrere Niederhalter 144 an und hebt diese an. Die Niederhalter 144 sind mittels federvorgespannter Niederhaltekraftgeräte 148 auf die Fahrfläche F zu vorgespannt. Hierbei wird den Niederhaltekraftgeräten 148 über eine Leitung 162 Fluiddruck zugeführt, welcher die Sperrventile 164 der Niederhaltekraftgeräte 148 öffnet und somit ein Verdrängen von Betriebsfluid aus den Niederhaltekraftgeräten 148 ermöglicht. Das verdrängte Betriebsfluid kann über die Leitungen 166 abfließen. Die Niederhalter 144 bilden somit neben der Stirnplatte 152 und den beiden Schwenkarmen 136 bzw. deren Halteplatten 138 eine dritte Angriffsstelle zum sicheren Ergreifen des Bugrads 120.

Zu diesem Zeitpunkt unterbricht die Steuerung den Aufnahmevorgang und zeigt auf einer Anzeige eine Auswahl von Flugzeugtypen an, deren Bugrad einen Durchmesser aufweist, der dem Durchmesser des ergriffenen Bugrads 120 bzw. 120' (siehe Figur 6) entspricht. Der Durchmesser des Bugrads 120 bzw. 120' kann beispielsweise mittels eines in den Einzugkraftgeräten 128 angeordneten (nicht dargestellten) Längenmesssystems ermittelt werden. Hat der Fahrer des Schleppfahrzeugs 100 den jeweiligen Flugzeugtyp ausgewählt und bestätigt und zudem den (nicht dargestellten) Knopf in der Fahrerkabine 104 erneut gedrückt, so setzt die Steuerung den Ankuppelvorgang damit fort, dass die Einzugkraftgeräte 128 das Bugrad 120 bzw. 120' mit einer für den jeweiligen Flugzeugtyp vorbestimmten Vorspannkraft zwischen der Stirnwand 152 und den Schwenkarmen 136 einspannen. Hierzu stellt eine (nicht dargestellte) Betriebsfluidzuführeinrichtung, die beispielsweise von einer Zahnradpumpe gebildet sein kann, Betriebsfluid mit einem entsprechend hohen Betriebsfluiddruck bereit.

Nach Abschluss des Einziehens und Vorspannens der Schwenkarme 136 verhindern Sperrventile 168, dass die erreichte Einzugsstellung in unbeabsichtigter Weise wieder aufgehoben wird.

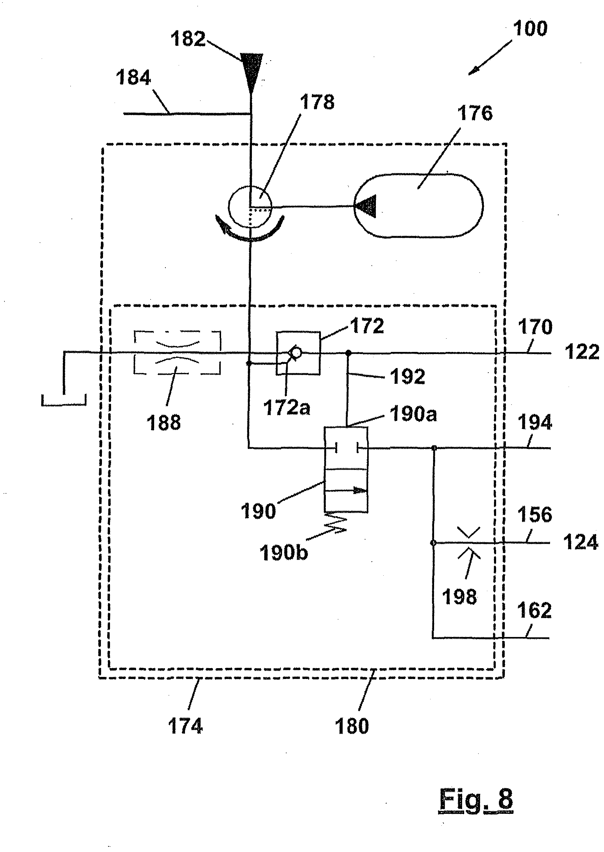

Nunmehr kann das so von der Greifvorrichtung 124 sicher ergriffene Bugrad 120 mittels der Hubkraftgeräte 132 der Hubvorrichtung 122 angehoben werden, um einen Schleppbereitschaftszustand des aus Flugzeug und Schleppfahrzeug 100 gebildeten Gespanns herzustellen. Hierzu wird den einseitig wirkenden Hubkraftgeräten 132 über eine Leitung 170 Betriebsfluid zugeführt. Der angehobene Zustand wird mittels eines in der Leitung 170 angeordneten Sperrventils 172 (siehe Figur 8) gesichert.

Zum Freigeben des Bugrads 120 im Normalbetrieb kann die Steuerung auf eine Freigabeeinleitungsbetätigung durch die Bedienungsperson hin, beispielsweise das Drücken eines Freigabeeinleitungsknopfs in der Fahrerkabine 104, die vorstehend erläuterten Abläufe in umgekehrter Reihenfolge und in umgekehrtem Sinn durchführen.

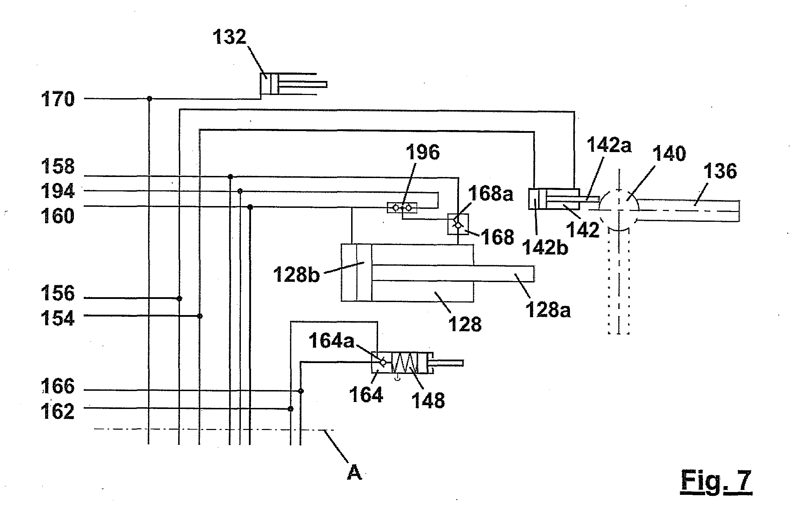

Liegt allerdings ein Systemausfall vor, beispielsweise ein Ausfall der angesprochenen Steuerung, so kommt die nachstehend mit Bezug auf die Figuren 7 und 8 näher erläuterte halbautomatische Notfreigabevorrichtung 174 zum Einsatz.

Die halbautomatische Notfreigabevorrichtung 174 umfasst einen Druckspeicher 176, in dem Betriebsfluid unter Druck gespeichert ist, sowie eine durch eine Bedienungsperson manuell betätigbare Freigabeeinleitungseinrichtung 178, welche in einer in Figur 8 gepunktet dargestellten Freigabeeinleitungsstellung den Druckspeicher 176 mit einer Freigabevorrichtung 180 verbindet. Die manuell betätigbare Freigabeeinleitungseinrichtung 178 kann beispielsweise von einem Blockkugelhahn gebildet sein.

Um sicherstellen zu können, dass der Druckspeicher 176 für den halbautomatischen Notfreigabebetrieb immer ausreichend mit Betriebsfluid gefüllt ist, befindet sich die Freigabeeinleitungseinrichtung 178 im Normalbetrieb in der in Figur 8 durchgezogen dargestellten Stellung, in welcher sie den Druckspeicher 176 mit einer Betriebsfluidzuführeinrichtung 182 verbindet, die zudem eine Normalbetriebs-Hydraulikschaltung 184 mit Betriebsfluid versorgt.

Im halbautomatischen Notfreigabebetrieb wird das im Druckspeicher 176 gespeicherte Betriebsfluid zum einen dem Steueranschluss 172a des durch Zuführen von Fluiddruck an seinem Steueranschluss offenbaren Sperrventils 172 zugeführt, welches in seiner Sperrstellung verhindert, dass sich das Bugrad 120 in unerwünschter Weise selbsttätig absenkt. Wurde das Sperrventil 172 durch Zuführen des Fluiddrucks des Druckspeichers 176 zu seinem Steueranschluss 172a geöffnet, so wird das in dem Hubkraftgerät 132 gespeicherte Betriebsfluid mittels der Bugradlast schwerkraftbedingt durch die Leitung 170 aus dem Kraftgerät 132 ausgetrieben, wodurch das Bugrad abgesenkt wird. Um die Absenkgeschwindigkeit des Bugrads 120 auf einen angenehmen und komfortablen Wert zu begrenzen, ist in der Leitung 170 ferner eine Drosseleinrichtung 188 vorgesehen ist, welche die Strömungsgeschwindigkeit des Betriebsfluids begrenzt.

Zum anderen wird das im Druckspeicher 176 gespeicherte Betriebsfluid einem weiteren Sperrventil 190 zugeleitet, welches sich gemäß Figur 8 in seiner Sperrstellung befindet. In diese Stellung wird das Sperrventil 190 durch den in der Leitung 170 herrschenden Fluiddruck vorgespannt, der ihm über eine mit der Leitung 170 verbundene Zweigleitung 192 an einem Steueranschluss 190a zugeführt wird. Festzuhalten ist, dass die Zweigleitung 192 von der Leitung 170 an einer Stelle abzweigt, die bezogen auf die Abflussrichtung des Betriebsfluids aus dem Kraftgerät 132 stromaufwärts des Sperrventils 172 angeordnet ist. Hierdurch kann sichergestellt werden, dass mit der eigentlichen Freigabe des Bugrads 120 durch die Greifvorrichtung 124 erst dann begonnen werden kann, wenn das Bugrad 120 vollständig abgesenkt worden und infolgedessen der Druck in der Hubleitung 170 unter einen vorbestimmten Wert abgesunken ist.

Hat der Druck in der Hubleitung 170 den vorbestimmten Wert unterschritten, so wird das Sperrventil 190 durch die Kraft der Feder 190b in seine Durchlassstellung übergeführt, in welcher es den Druckspeicher 176 mit der Greifvorrichtung 124 verbindet.

Bei einem Systemausfall befindet sich das dem Niederhaltekraftgerät 148 zugeordnete Sperrventil 164 in seinem gesperrten Zustand. Um die Freigabe des Bugrads 120 des Flugzeugs zu ermöglichen, muss daher das Niederhaltekraftgerät 148 zunächst entsperrt werden. Hierzu ist der Druckspeicher 176 dann, wenn sich das Sperrventil 190 in seiner Durchlassstellung befindet, über die Leitung 162 mit dem Steueranschluss 164a des Sperrventils 164 des Niederhaltekraftgeräts 148 verbunden. Durch das Öffnen des Sperrventils 164 kann sich das in der Greifvorrichtung eingespannte Bugrad 120 etwas entspannen, da das Niederhaltekraftgerät 148 nunmehr frei beweglich ist.

Zudem befindet sich bei einem Systemausfall auch das dem Einzugkraftgerät 128 zugeordnete Sperrventil 168 in seiner Sperrstellung. Zwar braucht das Einzugkraftgerät 128 zur Freigabe des Bugrads 120 eigentlich nicht in seine ausgefahrene Stellung übergeführt werden. Es übt jedoch über das an seinem beweglichen Teil 128a angeordnete Schwenkkraftgerät 142 eine Spannkraft auf den Kniehebelmechanismus 140 aus, in deren Folge der Kniehebelmechanismus 140 nicht überwunden und die Schwenkarme 136 nicht aufgeschwenkt werden können. Um die Freigabe des Bugrads 120 des Flugzeugs zu ermöglichen, muss daher zunächst diese Spannkraft aufgehoben werden. Hierzu ist der Druckspeicher 176 dann, wenn sich das Sperrventil 190 in seiner Durchlassstellung befindet, über eine Leitung 194 und ein Wechselventil 196 mit dem Steueranschluss 168a des Sperrventils 168 des Einzugkraftgeräts 128 verbunden, das durch den im Druckspeicher 176 gespeicherten Druck geöffnet wird. Somit kann sich das in der Greifvorrichtung 124 eingespannte Bugrad 120 entspannen, wobei es das bewegliche Teil 128a des Einzugkraftgeräts 128 in Ausfahrrichtung mitnimmt.

Schließlich ist der Druckspeicher 176 dann, wenn sich das Sperrventil 190 in seiner Durchlassstellung befindet, auch noch über die Leitung 156 mit dem Schwenkkraftgerät 142 verbunden. Aufgrund der Vorspannung des Kniehebelmechanismus 140 kann der am Schwenkkraftgerät 142 anstehende Fluiddruck dieses noch nicht zum Verschwenken des ihm zugeordneten Schwenkarms 136 veranlassen. Erst wenn sich das Bugrad 120, wie vorstehend beschrieben, vollständig entspannt hat, wird auf den Kniehebelmechanismus 140 keine Spannkraft mehr ausgeübt, so dass sich das Schwenckraftgerät 142 durch die Zufuhr von Betriebsfluid aus dem Druckspeicher 176 verkürzen und somit den Schwenkarm 136 in die ausgeschwenkte Position verstellen kann, in welcher er die Aufnahmeöffnung 116 freigibt, so dass das Bugrad 120 aus dem Aufnahmeraum 114 heraus bewegt werden kann.

Um verhindern zu können, dass die Schwenkarme 136 plötzlich aufspringen, ist in der Leitung 156 eine die Strömungsgeschwindigkeit begrenzende Blende 198 angeordnet.

Abschließend sei darauf hingewiesen, dass die Hydraulikschaltung der Freigabevorrichtung 174 unter Verwendung von Wechselventilen, beispielsweise dem Wechselventil 196, und Sperrventilen, beispielsweise durch Steuerdruck öffenbaren Sperrventilen, einfachen Rückschlagventilen und dergleichen, in die (nicht dargestellte) Hydraulikschaltung zur Realisierung des Normalbetriebs integriert werden kann.

## Patentansprüche

1. Schleppfahrzeug (100) zum schleppstangenlosen Manövrieren von Flugzeugen, umfassend
o ein im Wesentlichen U-förmig ausgebildetes Fahrgestell (102),
o wenigstens eine Vorderachse (108), deren Räder (106) dem Basisschenkel (102a) der U-Form zugeordnet sind,
o wenigstens eine Hinterachse (112), deren Räder (110) jeweils einem der beiden Seitenschenkel (102b) der U-Form zugeordnet sind,
o einen von dem Fahrgestell (102) umschlossenen Aufnahmeraum (114) mit einer zwischen den beiden freien Enden der Seitenschenkel (102b) der U-Form gebildeten Aufnahmeöffnung (116),
o eine Kupplungsvorrichtung (118) mit wenigstens einem fluidbetätigbaren Kraftgerät einer Greifanordnung (124) zum Ergreifen und Anheben eines Bugrads (120) eines zu manövrierenden Flugzeugs,
o einen Druckspeicher (176), in dem Betriebsfluid unter Druck gespeichert ist, und
o eine durch eine Bedienungsperson manuell betätigbare Freigabeeinleitungseinrichtung (178), welche in einer Freigabeeinleitungsstellung den Druckspeicher (176) mit einer Freigabevorrichtung (180) verbindet,
o die Freigabevorrichtung (180), welche dazu ausgelegt und bestimmt ist, auf die manuelle Überführung der Freigabeeinleitungseinrichtung (178) in die Freigabeeinleitungsstellung durch die Bedienungsperson hin, allein mittels der im Druckspeicher (176) gespeicherten Druckenergie und der potentiellen Energie der Bugradlast das Bugrad (120) des Flugzeugs selbsttätig zunächst abzusenken, bis es auf der Fahrfläche (F) aufsteht, und erst anschließend das Bugrad (120) freizugeben,
wobei in einer Hubleitung (170) des Schleppfahrzeugs (100), welche zu wenigstens einem fluidbetätigbaren Kraftgerät (132) einer Hubanordnung (122) der Kupplungsvorrichtung (118) führt, ein durch Zuführen von Fluiddruck an seinem Steueranschluss (172a) öffenbares Sperrventil (172) angeordnet ist, und die Freigabeeinleitungseinrichtung (178) in der Freigabeeinleitungsstellung den Druckspeicher (176) mit dem Steueranschluss (172a) des Sperrventils (172) verbindet, und
wobei die Freigabeeinleitungseinrichtung (178) in der Freigabeeinleitungsstellung den Druckspeicher (176) ferner mit einem weiteren Sperrventil (190) des Schleppfahrzeugs (100) verbindet, welches durch in der Hubleitung (170) herrschenden Fluiddruck in eine Sperrstellung vorspannbar und bei Unterschreiten eines vorbestimmten Werts des in der Hubleitung (170) herrschenden Fluiddrucks in eine Durchlassstellung überführbar ist, wobei das weitere Sperrventil (190) in seiner Durchlassstellung den Druckspeicher (176) mit wenigstens dem fluidbetätigbaren Kraftgerät (128, 142, 148) der Greifanordnung (124) der Kupplungsvorrichtung (118) verbindet.

2. Schleppfahrzeug nach Anspruch 1,
wobei in der Hubleitung (170) eine Drosseleinrichtung (188) vorgesehen ist, welche die Strömungsgeschwindigkeit des Betriebsfluids begrenzt.

3. Schleppfahrzeug nach Anspruch 1 oder 2,
wobei eine Zweigleitung (192) vorgesehen ist, welche von der Hubleitung (170) abzweigt und zu einem Vorspann-Steueranschluss (190a) des weiteren Sperrventils (190) führt, wobei die Zweigleitung (192) vorzugsweise an einer Stelle der Hubleitung (170) von dieser abzweigt, welche in Abflussströmungsrichtung von der Hubanordnung (122) weg vor dem einen Sperrventil (172) angeordnet ist.

4. Schleppfahrzeug nach den Ansprüchen 2 und 3,
wobei die Drosseleinrichtung (188) in der Hubleitung (170) in Abflussströmungsrichtung von der Hubanordnung (122) weg stromabwärts der Stelle angeordnet ist, an der die Zweigleitung (192) von der Hubleitung (170) abzweigt.

5. Schleppfahrzeug nach einem der Ansprüche 1 bis 4,
wobei die Greifanordnung (124) der Kupplungsvorrichtung (118) wenigstens ein erstes fluidbetätigbares Kraftgerät (142) zum Verschwenken wenigstens eines Schwenkarms (136) der Greifanordnung (124) umfasst oder/und wenigstens einzweites fluidbetätigbares Kraftgerät (128) zum Annähern des wenigstens einen Schwenkarms (136) an den oder/und zum Entfernen des wenigstens einen Schwenkarms (136) von dem Basisschenkel (102a) der U-Form umfasst oder/und wenigstens ein drittes fluidbetätigbares Kraftgerät (148) zum Niederhalten des Bugrads (120) des Flugzeugs umfasst.

6. Schleppfahrzeug nach Anspruch 5,
wobei das wenigstens eine dritte fluidbetätigbare Kraftgerät (148) zum Niederhalten des Bugrads (120) des Flugzeugs von einem federvorgespannten einseitig wirkenden Kraftgerät gebildet ist.

7. Schleppfahrzeug nach Anspruch 5 oder 6,
wobei dem wenigstens einen dritten fluidbetätigbaren Kraftgerät (148) ein durch Zuführen von Fluiddruck an seinem Steueranschluss (164a) öffenbares Sperrventil (164) zugeordnet ist, wobei der Steueranschluss (164a) dieses Sperrventils (164) nach Überführung des weiteren Sperrventils (190) in dessen Durchlassstellung mit dem Druckspeicher (176) verbunden ist.

8. Schleppfahrzeug nach einem der Ansprüche 5 bis 7,
wobei das wenigstens eine zweite fluidbetätigbare Kraftgerät (128) zum Einziehen oder/und Ausfahren des wenigstens einen Schwenkarms (136) von einem beidseitig wirkenden fluidbetätigbaren Kraftgerät gebildet ist.

9. Schleppfahrzeug nach einem der Ansprüche 5 bis 8,
wobei dem wenigstens einen zweiten fluidbetätigbaren Kraftgerät (128) ein durch Zuführen von Fluiddruck an seinem Steueranschluss (168a) öffenbares Sperrventil (168) zugeordnet ist, wobei der Steueranschluss (168a) dieses Sperrventils (168) nach Überführung des weiteren Sperrventils (190) in dessen Durchlassstellung mit dem Druckspeicher (176) verbunden ist.

10. Schleppfahrzeug nach einem der Ansprüche 5 bis 9,
wobei das wenigstens eine erste fluidbetätigbare Kraftgerät (142) zum Verschwenken des wenigstens einen Schwenkarms (136) von einem beidseitig wirkenden fluidbetätigbaren Kraftgerät gebildet ist.

11. Schleppfahrzeug nach einem der Ansprüche 5 bis 10,
wobei das wenigstens eine erste fluidbetätigbare Kraftgerät (142) mit dem ihm zugeordneten Schwenkarm (136) über einen Kniehebelmechanismus (140) verbunden ist.

12. Schleppfahrzeug nach einem der Ansprüche 5 bis 11,
wobei der Druckspeicher (176) nach Überführung des weiteren Sperrventils (190) in dessen Durchlassstellung mit dem wenigstens einen ersten fluidbetätigbaren Kraftgerät (142) verbunden ist.

13. Schleppfahrzeug nach einem der Ansprüche 1 bis 12,
wobei die Freigabeeinleitungseinrichtung (178) in einer Normalbetriebsstellung den Druckspeicher (176) mit einer Betriebsfluidzuführeinrichtung (182) verbindet.

## Claims

1. Towing vehicle (100) for manoeuvring aeroplanes without using tow bars, comprising
o a substantially U-shaped chassis (102),
o at least one front axle (108), the wheels (106) of which are assigned to the base limb (102a) of the U shape,
o at least one rear axle (112), the wheels (110) of which are each assigned to one of the two side limbs (102b) of the U shape,
o a receiving chamber (114), enclosed by the chassis (102) and comprising a receiving opening (116) formed between the two free ends of the side limbs (102b) of the U shape,
o a coupling device (118) having at least one fluid-actuable power device of a gripping arrangement (124) and for gripping and lifting a nose wheel (120) of an aeroplane which is to be manoeuvred,
o a pressure store (176), in which operating fluid is stored under pressure, and
o a release initiation device (178), which can be actuated manually by an operator and which in a release initiation position connects the pressure store (176) to a release device (180),
o the release device (180), which is configured and intended, upon manual transfer of the release initiation device (178) into the release initiation position by the operator, initially to lower the nose wheel (120) of the aeroplane automatically until it stands on the travel surface (F), simply by means of the pressure energy (176) stored in the pressure store and the potential energy of the nose wheel load, and only subsequently to release the nose wheel (120),
wherein a blocking valve (172), which can be opened by supplying fluidic pressure to the control terminal (172a) thereof, is arranged in a lifting line (170) of the towing vehicle (100) which leads to at least one fluid-actuable power device (132) of a lifting arrangement (122) of the coupling device (118), and the release initiation device (178) connects the pressure store (176) to the control terminal (172a) of the blocking valve (172) in the release initiation position, and
wherein in the release initiation position, the release initiation device (178) further connects the pressure store (176) to a further blocking valve (190) of the towing vehicle (100), which can be biased into a blocking position by fluidic pressure prevailing in the lifting line (170) and can be transferred into an open position if a predetermined value of the fluidic pressure prevailing in the lifting line (170) is undershot, the further blocking valve (190), in the open position thereof, connecting the pressure store (176) to the at least one fluid-actuable power device (128, 142, 148) of the gripping arrangement (124) of the coupling device (118).

2. Towing vehicle according to claim 1,
wherein a throttle means (188), which limits the flow speed of the operating fluid, is provided in the lifting line (170).

3. Towing vehicle according to claim 1 or 2,
wherein a branch line (192) is provided which branches off from the lifting line (170) and leads to a bias control terminal (190a) of the further blocking valve (190), the branch line (192) preferably branching off from the lifting line (170) at a point thereof which is arranged upstream from the blocking valve (172) in the discharge flow direction away from the lifting arrangement (122).

4. Towing vehicle according to claims 2 and 3,
wherein the throttle valve (188) in the lifting line (170) is arranged downstream, in the discharge flow direction away from the lifting arrangement (122), from the point at which the branch line (192) branches off from the lifting line (170).

5. Towing vehicle according to any of claims 1 to 4,
wherein the gripping arrangement (124) of the coupling device (118) comprises at least one first fluid-actuable power device (142) for pivoting at least one pivot arm (136) of the gripping arrangement (124) or/and at least one second fluid-actuable power device (128) for bringing the at least one pivot arm (136) towards or/and removing the at least one pivot arm (136) from the base limb (102a) of the U shape or/and at least one third fluid-actuable power device (148) for holding down the nose wheel (120) of the aeroplane.

6. Towing vehicle according to claim 5,
wherein the at least one third fluid-actuable power device (148) for holding down the nose wheel (120) of the aeroplane is formed by a spring-biased power device which acts one-sidedly.

7. Towing vehicle according to claim 5 or 6,
wherein a blocking valve (164), which can be opened by supplying fluidic pressure to the control terminal (164a) thereof, is assigned to the at least one third fluid-actuable power device (148), the control terminal (164a) of this blocking valve (164) being connected to the pressure store (176) after the further blocking valve (190) is transferred into the open position thereof.

8. Towing vehicle according to any of claims 5 to 7,
wherein the at least one second fluid-actuable power device (128) for retracting or/and extending the at least one pivot arm (136) is formed by a fluid-actuable power device which acts two-sidedly.

9. Towing vehicle according to any of claims 5 to 8,
wherein a blocking valve (168), which can be opened by supplying fluidic pressure to the control terminal (168a) thereof, is assigned to the at least one second fluid-actuable power device (128), the control terminal (168a) of this blocking valve (168) being connected to the pressure store (176) after the further blocking valve (190) is transferred into the open position thereof.

10. Towing vehicle according to any of claims 5 to 9,
wherein the at least one first fluid-actuable power device (142) for pivoting the at least one pivot arm (136) is formed by a fluid-actuable power device which acts two-sidedly.

11. Towing vehicle according to any of claims 5 to 10,
wherein the at least one first fluid-actuable power device (142) is connected to the pivot arm (136) assigned thereto via a knee lever mechanism (140).

12. Towing vehicle according to any of claims 5 to 11,
wherein the pressure store (176) is connected to the at least one first fluid-actuable power device (142) after the further blocking valve (190) is transferred into the open position thereof.

13. Towing vehicle according to any of claims 1 to 12,
wherein, in a normal operation position, the release initiation means (178) connects the pressure store (176) to an operating fluid means (182).

## Revendications

1. Véhicule tracteur (100) pour manœuvrer des avions sans barre de remorquage, comprenant
o un châssis (102) sensiblement en forme en U,
o au moins un essieu avant (108) dont les roues (106) sont associées à la branche de base (102a) de la forme en U,
o au moins un essieu arrière (112) dont les roues (110) sont associées chacune à l'une des deux branches latérales (102b) de la forme en U,
o un espace de réception (114) entouré par le châssis (102) avec une ouverture de réception (116) formée entre les deux extrémités libres des branches latérales (102b) de la forme en U,
o un dispositif d'accouplement (118) avec au moins un appareil de force actionnable par fluide d'un ensemble de préhension (124) pour saisir et soulever une roue avant (120) d'un avion à manœuvrer,
o un accumulateur de pression (176) dans lequel est stocké un fluide de fonctionnement sous pression, et
o un dispositif d'introduction de libération (178) pouvant être actionné manuellement par un opérateur, qui, dans une position d'introduction de libération, relie l'accumulateur de pression (176) à un dispositif de libération (180),
o le dispositif de libération (180), qui est conçu et destiné, lors du passage manuel du dispositif d'introduction de libération (178) dans la position d'introduction de libération par l'opérateur, à abaisser d'abord automatiquement la roue avant (120) de l'avion uniquement au moyen de l'énergie de pression stockée dans l'accumulateur de pression (176) et de l'énergie potentielle de la charge de la roue avant, jusqu'à ce qu'elle se dresse sur la surface de roulement (F), et ensuite seulement de libérer la roue avant (120),
dans lequel une soupape d'arrêt (172) ouvrable par amenée de pression de fluide à son raccord de commande (172a) est disposée dans une conduite de levage (170) du véhicule de remorquage (100), qui mène à au moins un appareil de force (132) actionnable par fluide d'un dispositif de levage (122) du dispositif d'accouplement (118), et où le dispositif d'introduction de libération (178) relie dans la position d'introduction de libération l'accumulateur de pression (176) au raccord de commande (172a) de la soupape d'arrêt (172), et
dans lequel le dispositif d'introduction de libération (178) relie en outre, dans la position d'introduction de libération, l'accumulateur de pression (176) à une autre soupape d'arrêt (190) du véhicule de remorquage (100), qui peut être précontrainte dans une position de blocage par la pression de fluide régnant dans la conduite de levage (170) et qui peut être transférée dans une position de passage lorsque la pression de fluide régnant dans la conduite de levage (170) est inférieure à une valeur prédéterminée, ledit autre soupape d'arrêt (190) reliant, dans sa position de passage, l'accumulateur de pression (176) à au moins l'appareil de force (128, 142, 148) actionnable par fluide de l'ensemble de préhension (124) du dispositif d'accouplement (118).

2. Véhicule tracteur selon la revendication 1, dans lequel un dispositif d'étranglement (188) est prévu dans la conduite de levage (170), lequel limite la vitesse d'écoulement du fluide de service.

3. Véhicule tracteur selon la revendication 1 ou 2, dans lequel une conduite de dérivation (192) est prévue qui part de la conduite de levage (170) et mène à un raccord de commande de précontrainte (190a) dudit autre soupape d'arrêt (190), la conduite de dérivation (192) partant de préférence de la conduite de levage (170) en un point qui est situé en amont de l'une des soupapes d'arrêt (172) dans le sens d'écoulement de l'ensemble de levage (122).

4. Véhicule tracteur selon les revendications 2 et 3, dans lequel le dispositif d'étranglement (188) est disposé dans la conduite de levage (170) en aval de l'endroit où la conduite de dérivation (192) se sépare de la conduite de levage (170) dans le sens de l'écoulement de l'ensemble de levage (122).

5. Véhicule tracteur selon l'une quelconque des revendications 1 à 4, dans lequel l'ensemble de préhension (124) du dispositif d'accouplement (118) comprend au moins un premier appareil de force (142) actionnable par fluide pour faire pivoter au moins un bras pivotant (136) de l'ensemble de préhension (124) ou/et au moins un deuxième appareil de puissance (128) actionnable par fluide pour rapprocher ledit au moins un bras pivotant (136) du ou/et pour éloigner ledit au moins un bras pivotant (136) de la branche de base (102a) de la forme en U ou/et comprenant au moins un troisième appareil de force (148) actionnable par fluide pour maintenir la roue avant (120) de l'avion en position basse.

6. Véhicule tracteur selon la revendication 5, dans lequel ledit au moins un troisième appareil de force (148) actionnable par fluide pour maintenir la roue avant (120) de l'avion en position basse est formé par un appareil de force agissant d'un côté, précontraint par un ressort.

7. Véhicule tracteur selon la revendication 5 ou 6, dans lequel au moins un troisième appareil de force (148) actionnable par fluide est associé à une soupape d'arrêt (164) pouvant être ouverte par l'amenée de pression de fluide à son raccord de commande (164a), le raccord de commande (164a) de cette soupape d'arrêt (164) étant relié à l'accumulateur de pression (176) après le passage dudit autre soupape d'arrêt (190) dans sa position de passage.

8. Véhicule tracteur selon l'une des revendications 5 à 7, dans lequel ledit au moins un deuxième appareil de force (128) actionnable par fluide pour rétracter ou/et déployer ledit au moins un bras pivotant (136) est formé par un appareil de force actionnable par fluide agissant des deux côtés.

9. Véhicule tracteur selon l'une des revendications 5 à 8, dans lequel une soupape d'arrêt (168) pouvant être ouverte par l'amenée de pression de fluide à son raccord de commande (168a) est associée audit au moins un deuxième appareil de force (128) actionnable par fluide, le raccord de commande (168a) de cette soupape d'arrêt (168) étant relié à l'accumulateur de pression (176) après le passage de l'autre soupape d'arrêt (190) dans sa position de passage.

10. Véhicule tracteur selon l'une des revendications 5 à 9, dans lequel ledit au moins un premier appareil de force (142) actionnable par fluide pour faire pivoter ledit au moins un bras pivotant (136) est formé par un appareil de force actionnable par fluide agissant des deux côtés.

11. Véhicule tracteur selon l'une quelconque des revendications 5 à 10, dans lequel ledit au moins un premier appareil de force (142) actionnable par fluide est relié au bras pivotant (136) qui lui est associé par un mécanisme à genouillère (140).

12. Véhicule tracteur selon l'une des revendications 5 à 11, dans lequel l'accumulateur de pression (176) est relié audit au moins un premier appareil de force (142) actionnable par fluide après le passage dudit autre soupape d'arrêt (190) dans sa position de passage.

13. Véhicule tracteur selon l'une quelconque des revendications 1 à 12, dans lequel le dispositif d'introduction de libération (178) relie, dans une position de fonctionnement normal, l'accumulateur de pression (176) à un dispositif d'alimentation en fluide de service (182).
